# EUROPEAN PATENT APPLICATION

(11) **EP 2 214 243 A1**
(43) Date of publication of application: **04.08.2010**
(21) Application number: 08846057.1
(22) Date of filing: 22.10.2008
(51) Int. Cl.: H01M 8/04, H01M 8/10

(54) **COUPLER FOR FUEL CELL AND FUEL CELL**

(30) Priority: 29.10.2007 JP 2007280222
(71) Applicant: Kabushiki Kaisha Toshiba, Minato-ku Tokyo 105-8001 (JP); Toyo Seikan Kaisha, Ltd., Tokyo 100-8522 (JP)
(72) Inventor: TAKAHASHI, Kenichi, Tokyo 105-8001 (JP); HASEBE, Hiroyuki, Tokyo 105-8001 (JP); KAWAMURA, Koichi, Tokyo 105-8001 (JP); YOSHIHIRO, Kenji, Yokohama-shi Kanagawa 230-0001 (JP); YAMAMORI, You, Yokohama-shi Kanagawa 230-0001 (JP)
(74) Representative: Henkel, Feiler & Hänzel
(86) International application number: PCT/JP2008/002988
(87) International publication number: WO 2009/057261

(57) **Abstract**

A coupler for a fuel cell, comprising a socket which is provided on the fuel cell and has a valve body and an urging component for urging the valve body in the direction of closing it and a nozzle which is provided on a fuel cartridge for storing a liquid fuel for the fuel cell and has a valve body and an urging component for urging the valve body in the direction of closing it to supply the liquid fuel in the fuel cartridge to the fuel cell by opening both the valve bodies when the nozzle is connected to the socket, wherein a lubricity providing portion for applying lubricating properties is disposed on the sliding contact surfaces of the socket and the nozzle, which make sliding contact with each other when the socket and the nozzle are connected to each other or separated from each other.

## Description

### Technical Field

The present invention relates to a coupler for a fuel cell and a fuel cell using it.

### Background Art

In recent years, attempts have been made to use a fuel cell as a power source for various types of portable electronic equipment such as a notebook computer, a cellular phone and the like to make it possible to use them for a long time without recharging. The fuel cell has characteristics that electricity can be generated by merely supplying a fuel and air and generated continuously for a long time by replenishing the fuel. Therefore, if the fuel cell can be made compact, it is a very advantageous system as a power source for portable electronic equipment.

Especially, a direct methanol fuel cell (DMFC) using a methanol fuel having a high energy density is promising as a power source or the like for portable appliances because it can be made compact and its fuel can also be handled with ease. As a method of supplying the liquid fuel of the DMFC, there are known an active method such as a gas supply type, a liquid supply type or the like and a passive method such as an inside vaporization type or the like which supplies the liquid fuel from a fuel tank to a fuel electrode by vaporizing in the cell. The passive method is advantageous for miniaturization of the DMFC.

A passive type DMFC of an internal vaporization type or the like vaporizes the liquid fuel stored in the fuel tank via, for example, a fuel-impregnated layer, a fuel vaporization layer or the like to supply the vaporized component of the liquid fuel to the fuel electrode (see, for example, Patent References 1 and 2). The liquid fuel is supplied to the fuel tank by means of a fuel cartridge. For a satellite type (external injection type) fuel cartridge, a coupler comprising a nozzle and a socket each having a valve mechanism therein is used to stop and inject the liquid fuel (see, for example, Patent Reference 3).

For connection or separation of the nozzle and the socket, they are occasionally connected or separated with the shaft center of the nozzle inclined with respect to the shaft center of the socket. For example, when a side portion of the nozzle is contacted to an edge portion of a cylindrical nozzle insertion port of the socket, a tip end of the nozzle is also contacted to the inner surface of the nozzle insertion port, and a bending load, which has the edge portion of the nozzle insertion port as a fulcrum, is sometimes applied to the nozzle.

The nozzle and the socket are now under downsizing in accordance with the downsizing of the fuel cell, and especially since the nozzle is formed to have a small diameter, it is easily broken when the bending load is applied. If the nozzle is broken and the valve mechanism does not operate normally, the liquid fuel might leak from the fuel cartridge even though it is not connected to, for example, the socket, and it is not preferable for safety reasons.
Patent Reference 1: JP-B2 3413111 (Patent Publication)
Patent Reference 2: JP-A 2004-171844 (KOKAI)
Patent Reference 3: JP-A 2004-127824 (KOKAI)

### Disclosure of the Invention

The present invention has been made in view of the above circumstances and provides a coupler for a fuel cell, which has excellent reliability and safety and suppresses a nozzle from being damaged due to application of an excessive bending load to the nozzle when a socket and the nozzle are connected or separated. The present invention also provides a fuel cell having excellent reliability and safety using the above coupler for a fuel cell.

A coupler for a fuel cell according to an embodiment of the present invention comprises a socket which is provided on the fuel cell and has a valve body and an urging component for urging the valve body in the direction of closing it and a nozzle which is provided on a fuel cartridge for storing a liquid fuel for the fuel cell and has a valve body and an urging component for urging the valve body in the direction of closing it to supply the liquid fuel in the fuel cartridge to the fuel cell by opening both the valve bodies when the nozzle is connected to the socket, wherein a lubricity providing portion for applying lubricating properties is disposed on the sliding contact surfaces of the socket and the nozzle, which make sliding contact with each other when the socket and the nozzle are connected to each other or separated from each other.

A fuel cell according to an embodiment of the present invention comprises a socket provided with the lubricity providing portion in the coupler for a fuel cell according to the invention; a fuel storing section for storing a liquid fuel to be supplied via the socket; and an electromotive portion for generating power by using the liquid fuel.

### Brief Description of Drawings

[FIG 1] FIG 1 is a schematic view showing a coupler for a fuel cell and a fuel cell using it according to the invention.
[FIG. 2] FIG 2 is a sectional view (unconnected state) showing an example of the coupler for a fuel cell of the invention.
[FIG 3] FIG. 3 is a sectional view showing in a magnified fashion the socket shown in FIG 2.
[FIG. 4] FIG 4 is a sectional view showing a connected state of the coupler for a fuel cell shown in FIG 2.
[FIG. 5] FIG. 5 is a sectional view showing a connecting or separating state of the coupler for a fuel cell shown in FIG 2.
[FIG. 6] FIG 6 is a sectional view showing another connecting or separating state of the coupler for a fuel cell shown in FIG 2.
[FIG. 7] FIG 7 is a sectional view showing an example of the fuel cell of the invention.

### Explanation of Numerals

1... coupler for fuel cell, 1n... nozzle, Is... socket, 2... fuel cell, 3... fuel cartridge, 4... fuel battery cell, 5... fuel storing section, 6... fuel receiving portion, 7... fuel cartridge body, 11... nozzle head, 12... peripheral groove, 13 ... key portion, 14... valve (valve body), 15... valve holder, 16... valve seat, 17... O-ring, 18... compression spring, 19... communication hole, 20... key ring, 21... container nozzle, 22... inserting portion, 30... lubricity providing portion, 31... outer cylinder portion, 31a... front outer cylinder portion, 31b... rear outer cylinder portion, 32... inner cylinder portion, 32a... intermediate inner cylinder portion, 32b... rear inner cylinder portion, 34... O-ring, 35... guide member, 36.., nozzle holding mechanism, 37... rubber holder, 40... valve (valve body), 41... valve seat, 42... O-ring, 43... compression spring, 44... key groove, 51... gas selectively permeable membrane, 52... anode catalyst layer, 53... anode gas diffusion layer, 54... cathode catalyst layer, 55... cathode gas diffusion layer, 57... anode conductive layer, 58... cathode conductive layer, 59, 60... O-ring, 61... moisture retaining layer, 62... surface layer, 63... cover

### Mode for Carrying out the Invention

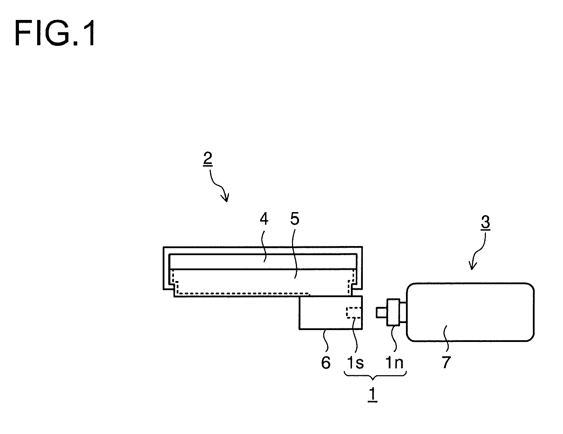

Modes of conducting the present invention will be described below with reference to the drawings. FIG 1 shows a coupler 1 for a fuel cell (hereafter simply called a coupler) of the invention, a fuel cell 2 using it and a fuel cartridge 3 (hereafter simply called a cartridge). The coupler 1 is a connection mechanism used to supply the liquid fuel from the cartridge 3 to the fuel cell 2, and configured of a socket 1s which is a connection mechanism on the side of the fuel cell and a nozzle In which is a connection mechanism on the side of the cartridge.

The fuel cell 2 is comprised of a fuel battery cell 4 which becomes an electromotive portion, a fuel storing section 5 which stores the liquid fuel to be supplied to the fuel battery cell 4, and a fuel receiving portion 6 which supplies the liquid fuel to the fuel storing section 5, and the socket Is which configures one of the coupler 1 is disposed on the fuel receiving portion 6. The socket Is has a valve mechanism therein as described later and is in a closed state except when the liquid fuel is supplied. The fuel cell 2 may have a structure that the liquid fuel is supplied directly from the fuel receiving portion 6 to the fuel battery cell 4 without through the fuel storing section 5.

Meanwhile, the cartridge 3 has a cartridge body 7 which is a container for storing the liquid fuel and is provided at its leading end with the nozzle In which discharges the liquid fuel stored in the cartridge body 7 and configures the other of the coupler 1. The nozzle In also has a valve mechanism therein as described later and is in a closed state except when the liquid fuel is discharged. This cartridge 3 is a so-called satellite type (external injection type) cartridge and connected only when the liquid fuel is injected into to the fuel cell 2.

The cartridge body 7 stores a liquid fuel suitable for the fuel cell 2, for example, a methanol fuel such as an aqueous methanol solution having various concentrations, pure methanol or the like for a direct methanol fuel cell (DMFC). The liquid fuel stored in the cartridge body 7 is not necessarily limited to the methanol fuel but may be another liquid fuel, for example, an ethanol fuel such as an aqueous ethanol solution or pure ethanol, a propanol fuel such as an aqueous propanol solution or pure propanol, a glycol fuel such as an aqueous glycol solution or pure glycol, dimethyl ether, formic acid, or the like. At any event, a liquid fuel suitable for the fuel cell 1 is stored.

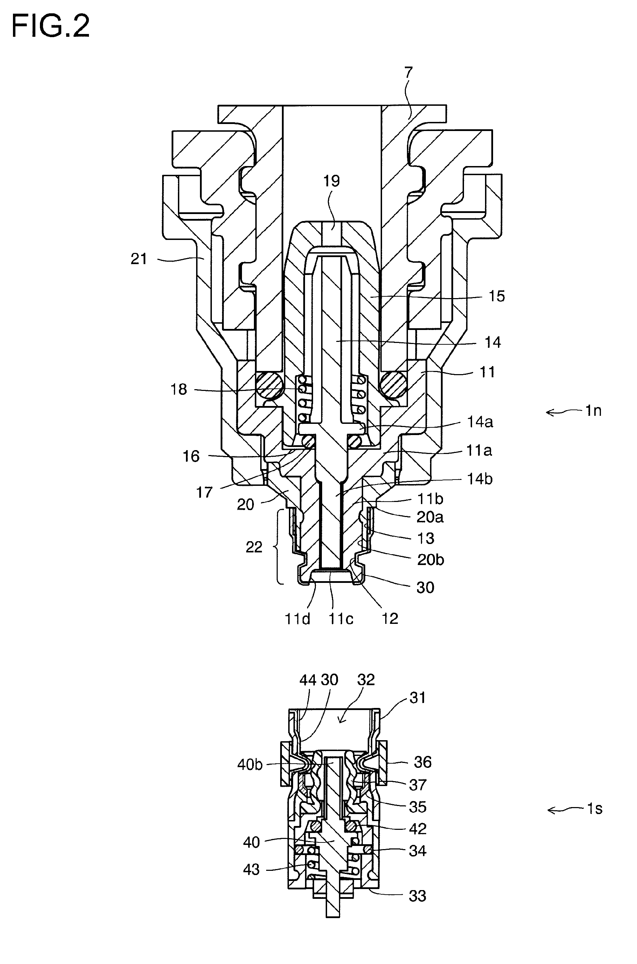

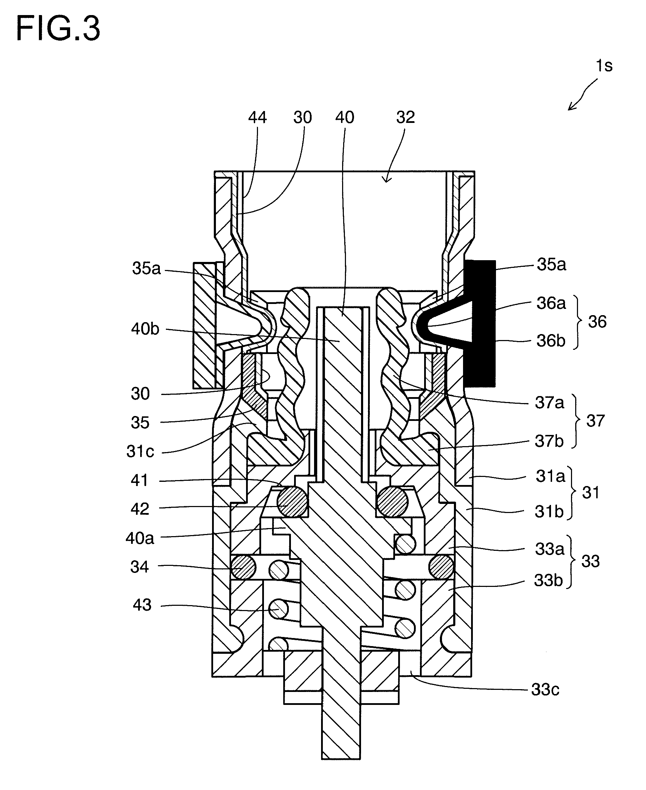

The specific structure of the coupler 1 is described below with reference to FIG 2 and FIG 3. FIG 2 shows the socket Is and the nozzle In configuring the coupler 1, which are in a state before connection. FIG. 3 shows a magnified state of the socket Is shown in FIG 2. In the following description, the leading end denotes an end side (upper side in the drawing) of the socket 1s into which the nozzle In is inserted and an end side (lower side in the drawing) of the nozzle In into which the socket Is is inserted.

The nozzle In is also called a male coupler or a plug and disposed to cover the opening portion on the tip end of the cartridge body 7. A nozzle head 11 is mainly comprised of a cylindrical base section 11a, in which the tip end of the cartridge body 7 is fitted, and a small-diameter shaft section 11b which is formed at the tip end. A shaft hole is formed in the shaft section 11b, and a nozzle opening 11c is formed in the tip end of this shaft hole.

A recessed portion 11d is formed in the tip end of the shaft section 11b. The recessed portion 11d is formed by recessing the tip end of the shaft section 11b, and the nozzle opening 11c is formed in the bottom of the recessed portion 11d. Since the recessed portion 11d functions as a temporary storing portion for the liquid fuel remaining (adhering to) on the tip end of the nozzle In, an operator is free from touching the liquid fuel. A peripheral groove 12 which is a recessed portion to be fitted with a nozzle holding mechanism 36 of the socket Is described later and a key portion 13 which functions as a fuel identification means via a key ring 20 described later are formed on an external peripheral surface of the shaft section 11b. The fuel identification means is configured of the key portion 13 and a key groove 44 which is on the side of the socket 1s as described later.

A cup-like valve holder 15 which holds therein a valve 14 which is a valve body is disposed within the base section 11a. The valve holder 15 defines a valve chamber and is fixed with the outer edge portion of its tip end held between the cartridge body 7 and the base section 11a. The valve 14 has a valve head 14a and a valve stem 14b. The valve head 14a is disposed within the valve chamber defined by the valve holder 15, and the valve stem 14b is housed in the shaft hole of the shaft section 11b. Thus, the valve 14 is held by them to be movable back and forth in an axial direction.

An O-ring 17 is disposed between the valve head 14a and a valve seat 16 which is attached within the base section 11a. A force to press the valve head 14a to the valve seat 16 by an elastic body such as a compression spring 18 or the like is applied to the valve 14, thereby pressing the O-ring 17.

In a normal state (state that the fuel cell 2 and the cartridge 3 are not connected), the O-ring 17 is pressed to the valve seat 16 by the valve head 14a to bring the fuel passage in the nozzle In into a closed state. Meanwhile, when the cartridge 3 is connected to the fuel cell 2 as described later, the valve stem 14b retracts to separate the valve head 14a from the valve seat 16, and the fuel passage in the nozzle In is put in an open state. A communication hole 19 which is a liquid fuel passage is formed in the rear end portion of the valve holder 15, and the liquid fuel stored in the cartridge body 7 flows into the nozzle In through the communication hole 19.

Besides, a key ring 20 which is a ring-shaped member having a cam mechanism and a container nozzle 21 are also disposed on the outer surface of the nozzle head 11. The key ring 20 is engaged with the nozzle head 11 by press-fitting during ordinary use. When the cartridge 3 is connected to the fuel cell 2 and force of bending, twisting or the like is applied, rotational rising of the key ring 20 is caused by means of the cam mechanism to release the connected state to separate the nozzle In from the socket Is. For example, the container nozzle 21 is screwed onto the cartridge body 7, so that the nozzle In having the nozzle head 11, the valve 14 and the like is fixed to the tip end of the cartridge body 7.

And, a portion of the nozzle In to be inserted into the socket Is becomes an inserting portion 22. Specifically, a portion on the tip end side from an engagement portion 20a, which is formed at an almost intermediate position of the key ring 20 and engaged with the front end edge portion of a nozzle insertion port 32 of the socket Is when connected to the socket 1s, becomes the inserting portion 22. The inserting portion 22 includes the front end side portion of the shaft section 11b of the nozzle head 11, a small-diameter portion 20b of the key ring 20, and the key portion 13. The outside surface of the inserting portion 22 becomes a sliding contact surface which make sliding contact with the front end edge portion or the inner surface of the socket 1s when the socket 1s and the nozzle In are connected or separated, so that a lubricity providing portion 30 is disposed on the outside surface of the inserting portion 22 which becomes the sliding contact surface. Details of the lubricity providing portion 30 will be described later.

Meanwhile, the socket Is is also called a female coupler. The socket Is which is shown in a magnified state in FIG 3 has an outer cylinder portion 31 having a cylindrical shape, and its front end forms the nozzle insertion port 32 having a substantially recessed cross-sectional shape. For example, the outer cylinder portion 31 is configured of a front outer cylinder portion 31a having a substantially cylindrical shape, and a rear outer cylinder portion 31b having a substantially cylindrical shape, and the front outer cylinder portion 31a is fixed to an upper outer portion of the rear outer cylinder portion 31b.

An inner cylinder portion 33 is disposed inside the outer cylinder portion 31, and the inner cylinder portion 33 is configured of, for example, an intermediate inner cylinder portion 33a and a rear inner cylinder portion 33b. An O-ring 34 is interposed between the intermediate inner cylinder portion 33a and the rear inner cylinder portion 33b to enhance airtightness of the valve chamber.

The front outer cylinder portion 31a has a function to guide the outer circumferential surface of the nozzle head 11 when the nozzle In is connected by inserting. A tip end of the nozzle head 11 is not entirely guided by the front outer cylinder portion 31a, and there is a gap between them. Therefore, a ring-shaped guide member 35 is arranged in the socket Is to guide the tip end of the nozzle In (nozzle head 11).

The guide member 35 is arranged inside the front outer cylinder portion 31a and on the front end of the rear outer cylinder portion 31b. The guide member 35 has plural cutout portions 35a on its front end, a hook portion 3a which is protruded toward the iimer diameter side of the nozzle holding mechanism 36 described later is disposed to pass through the cutout portions 35a, and the guide member 35 is pressed to the rear outer cylinder portion 31b by the nozzle holding mechanism to prevent it from dropping from the socket 1s.

The guide member 35 has an inner shape corresponding to the shape of the tip end of the nozzle head 11. Thus, the tip end of the nozzle In connected to the socket Is is guided to restrict an inclination of the nozzle In in the connected state. In other words, in the state that the nozzle In is connected to the socket Is, the guide member 35 is arranged at a portion positioned at the tip end of the nozzle head 11. Thus, an effect of guiding the nozzle In at the time of connection and a centering effect based on it can be obtained. Thus, the inclination of the nozzle In in the connected state is restricted, and a stable connected state can be maintained.

A rubber holder 37 is mounted as an elastic holder on the intermediate inner cylinder portion 33a described above. The rubber holder 37 has a cylindrical holder body 37a which is elasticized in an axial direction on the basis of its bellows-like shape and material property (rubber elasticity), and a flange portion 37b which is provided on its rear end. The rubber holder 37 has the flange portion 37b fixed between the intermediate inner cylinder portion 33a and a ring-shaped projected portion 31c formed on the rear outer cylinder portion 31b.

The rubber holder 37 is a sealing member which forms a contact seal face with the nozzle head 11 by fitting its tip end into the recessed portion 11d of the nozzle head 11, and its inside is determined to be a liquid fuel passage. In other words, the rubber holder 37 is a sealing member which seals against the outside when the valve mechanism of the socket 1s is released. The recessed portion 11d of the nozzle head 11 also has a sealing function by forming the contact seal surface when it is fitted onto the tip end portion of the rubber holder 37.

A valve 40 is disposed within the socket Is. The valve 40 is provided with a valve head 40a and a valve stem 40b. The valve head 40a is disposed within the valve chamber which is defined by the intermediate inner cylinder portion 33a and the rear inner cylinder portion 33b. The valve stem 40b is housed in the rubber holder 37, and the valve 40 is movable back and forth in the axial direction.

An O-ring 42 is disposed between the valve head 40a and a valve seat 41 which is formed on the under surface of the intermediate inner cylinder portion 33a. A force for pressing the valve head 40a to the valve seat 41 by an elastic body such as a compression spring 43 or the like is always applied to the valve 40 to press the O-ring 42. In a normal state (state that the fuel cell 2 and the cartridge 3 are not connected), the O-ring 42 is pressed to the valve seat 41 via the valve head 40a. Thus, the fuel passage in the socket 1s is put in a closed state. Meanwhile, when the cartridge 3 is connected to the fuel cell 2, the valve stem 40b retracts to separate the valve head 40a and the valve seat 41 from each other, and the fuel passage in the socket 1s is brought into an open state.

The rear inner cylinder portion 33b is provided with a communication hole 33c which is connected to the fuel storing section 5 through the fuel receiving portion 6. Thus, the socket 1s has the liquid fuel passage connected to the fuel storing section 5 through the communication hole 33c formed in the rear inner cylinder portion 33b. Then, the valves 18 and 40 are put in an open state to open the fuel passages in the nozzle In and the socket 1s to enable to inject the liquid fuel stored in the cartridge 3 into the fuel storing section 5 through the nozzle In and the socket Is.

The nozzle holding mechanism 36 for holding the connected state when the nozzle In is connected is disposed on the front outer cylinder portion 31a. The nozzle holding mechanism 36 has the hook portion 36a which is protruded toward the inner diameter side of the front outer cylinder portion 31a, and an elastic body 36b which applies a pressing force to the hook portion 36a so as to hold the nozzle In.

The hook portion 36a is applied with a pressing force toward the inner diameter side by an elastic force of the elastic body 36b which is disposed on the outer surface of the front outer cylinder portion 31a and also retractable to the outer diameter side. The nozzle holding mechanism 36 holds the connected state of the nozzle 1n by engaging the hook portion 3 6a with the peripheral groove peripheral groove 12 of the nozzle head 11 when the nozzle In is connected. In the connected state, the nozzle In is elastically held by the hook portion 36a, and if an excessive force of bending, twisting or the like is applied to the cartridge 3, the hook portion 36a retracts to release the connected state of the nozzle In.

A key groove 44, which is a groove formed in the axial direction and functions as a fuel identification means, is provided on the inner diameter side of the front outer cylinder portion 31a. The key groove 44 has a shape to engage with the key portion 13 of the nozzle In described above. Since the key portion 13 and the key groove 44 have paired shapes, an injection error of the liquid fuel can be prevented by, for example, defining the shape depending on the liquid fuel. In other words, the key portion 13 is determined to have a shape complying with a type (type, concentration or the like) of the liquid fuel, and the key groove 44 is determined to have a shape complying with the key portion 13, so that only the cartridge 3 which stores a liquid fuel suitable for the fuel cell 2 can be made connectable. Thus, it becomes possible to prevent an operation failure and property degradation due to an injection error of the liquid fuel.

The lubricity providing portion 30 of the invention is disposed on the sliding contact surfaces of the socket 1s and the nozzle In, which make sliding contact with each other when they are connected or separated, and for example, it is provided on the outside surface of the inserting portion 22 of the nozzle In and the front surface and the inner surface of the front end edge portion of the nozzle insertion port 32 of the socket 1s. The outside surface of the inserting portion 22 of the nozzle In and the front surface and the inner surface of the front end edge portion of the nozzle insertion port 32 of the socket Is are portions which are slid with each other and become the sliding contact surfaces when the socket Is and the nozzle In are connected or separated.

By disposing the lubricity providing portion 30 on the sliding contact surfaces, the nozzle In can be easily slid with respect to the socket Is without being caught when the socket Is and the nozzle In are connected or separated, and the connected state can be released before an excessive bending load is applied to the nozzle 1n. Thus, the nozzle In is suppressed from being broken, the liquid fuel is suppressed from leaking, and reliability and safety can be made excellent.

The sliding contact surface of the nozzle In is the outside surface of the inserting portion 22 as described above, but specifically, when the outside surface of the tip end portion of the shaft section 11b of the nozzle head 11 and the outside surface of the tip end portion of the shaft section 11 are covered with the key ring 20 and the key portion 13, the outermost positioned one between the key ring 20 and the key portion 13 is the outside surface.

Here, the surface (inner surface) of the peripheral groove 12 which is formed in the outer circumference of the shaft section 11 is included in the outside surface of the inserting portion 22 as the sliding contact surface, but the surface (inner surface) of the recessed portion 11d formed on the tip end does not necessarily make sliding contact with the inner surface of the socket 1s, so that it is not included in the outside surface of the inserting portion 22 as the sliding contact surface. In other words, the provision of the lubricity providing portion 30 on only the surface of the recessed portion 11d is not included in the scope of the present invention. The present invention does not exclude the provision of the lubricity providing portion 30 on portions other than the surface of the recessed portion 11d and also the provision of the lubricity providing portion 30 on the surface of the recessed portion 11d.

The lubricity providing portion 30 is not necessarily required to be provided on the entire outside surface of the inserting portion 22 as shown in FIG 2. For example, it may be provided particularly on only a portion which tends to be contacted to the nozzle insertion port 32 when the inserting portion 22 and the nozzle insertion port 32 are connected or separated. Thus, its forming location can be selected appropriately. When the lubricity providing portion 30 is provided on the nozzle insertion port 32, it is preferable that the lubricity providing portion 30 is also provided on the inserting portion 22, but it is not indispensable to provide the lubricity providing portion 30 on the inserting portion 22.

Meanwhile, the sliding contact surface of the socket 1s is the front surface and the inner surface of the front end edge portion of the nozzle insertion port 32 as described above, but specifically, includes the front surface and the inner surface (including the surface of a corner portion formed by them) of the front end edge portion of the front outer cylinder portion 31a, the front surface and the inner surface (including the surface of a corner portion formed by them) of the front end edge portion of the guide member 35, and the surface of the hook portion 36a of the nozzle holding mechanism 36.

The lubricity providing portion 30 is not necessarily required to be provided on all of the front surface and the inner surface of the front end edge portion of the nozzle insertion port 32 as shown in FIG 3, and for example, it may be provided on only a portion to which the inserting portion 22 tends to be contacted when the inserting portion 22 and the nozzle insertion port 32 are connected or separated, and a providing position can be selected appropriately. When the lubricity providing portion 30 is provided on the inserting portion 22, it is preferable that the lubricity providing portion 30 is also provided on the nozzle insertion port 32, but in such a case, the lubricity providing portion 30 is not necessarily required to be provided on the nozzle insertion port 32.

The surface of the rubber holder 37 in the socket 1s does not necessarily become a cause of catching the nozzle In when the socket 1s and the nozzle 1n are connected or separated and does not apply an excessive bending load to the nozzle In, so that it is not included in the sliding contact surface according to the invention. In other words, the disposition of the lubricity providing portion 30 on only the surface of the rubber holder 37 is not included in the scope of the invention. The present invention does not exclude the provision of the lubricity providing portion 30 on the inner surface of the nozzle insertion port 32 and the provision of the lubricity providing portion 30 on the surface of the rubber holder 37.

The lubricity providing portion 30 is not particularly restricted when it can apply lubricating properties to the sliding contact surfaces and can make the nozzle 1n slide smoothly with respect to the socket 1s. For example, a resin coating formed of a solid resin at normal temperature, a coating formed of a liquid or grease lubricant at normal temperature, a metal coating, and a coating mainly formed of carbon are used suitably. Among them, the resin coating, the metal coating and the coating mainly formed of carbon are especially preferable because they are not worn heavily by the repeated contact between the socket Is and the nozzle In and have excellent durability.

Examples of the resin configuring the above resin coating include preferably at least one resin selected from a fluorine-based resin, a silicone-based resin, an olefin-based resin and a urethane-based resin.

Examples of the fluorine-based resin include a tetrafluoroethylene resin, a tetrafluoroethylene-perfluoroalkoxyethylene copolymer resin, a tetrafluoroethylene-hexafluoropropylene copolymer resin, a tetrafluoroethylene-hexafluoropropylene-perfluoroalkoxyethylene copolymer resin, a tetrafluoroethylene-ethylene copolymer resin, a trifluoride ethylene chloride resin, a trifluoride ethylene chloride-ethylene copolymer resin, a vinylidene fluoride resin, a vinyl fluoride resin, etc.

Examples of the silicone-based resin include resins such as dimethylpolysiloxane having a siloxane skeleton, methylphenylpolysiloxane and the like, or a denatured substance thereof (e.g., amino-modification and alkyl-modification).

Examples of the olefin-based resin include a polyethylene resin, a polypropylene resin, an ethylene-propylene copolymer resin, an ethylene-butene copolymer resin, an ethylene-octene copolymer resin, a polypropylene-butene copolymer resin, a polybutene resin, an ethylene-acrylic ester copolymer resin, an ethylene-methacrylic ester copolymer resin, an ethylene-acrylic acid copolymer resin and an ethylene-vinyl acetate copolymer resin, or a denatured substance thereof.

In addition, examples of the urethane-based resin include mainly a polyurethane resin obtained by copolymerizing a monomer with a urethane bond obtained by condensing an isocyanate group and an alcohol group, or a denatured substance thereof.

The resin coating can be formed on the sliding contact surface by, for example, applying a liquid substance of the above-described resin material to the front surface or the inner surface of the front end edge portion of the socket 1s as the sliding contact surface or a desired portion of the outside surface of the nozzle In, and curing by a thermal treatment. The method of applying the liquid substance is not particularly limited and it is possible to adopt any known method such as a brush coating method, a spray coating method, etc. The thermal treatment is preferably performed at a temperature suitable for the resin material, and generally it is preferably performed at 100°C or more and 450°C or below. The coating and thermal treatment of the liquid substance may be performed only one time or may be repeated plural times.

The resin coating is not necessarily limited to a particular thickness but preferably 10 nm or more and 500 µm or below, and more preferably 50 nm or more and 100 µm or below. If the resin coating has a thickness of less than 10 nm, there is a possibility that sufficient lubricating properties cannot be assured. And the socket 1s and the nozzle In tend to wear because of repeated sliding contact between them, possibly resulting in unsatisfactory durability. Durability can be made satisfactory when the resin coating has a thickness of about 500 µm, but if the thickness is larger than that, it takes time to form the resin coating, and productivity lowers, possibly resulting in difficulty in attaching the nozzle In to the socket Is.

Meanwhile, at least one type of lubricant selected from a fluorine-based lubricant, a silicone-based lubricant and an olefin-based lubricant is suitably used as the lubricant forming the above coating.

As the fluorine-based lubricant, a known fluorine oil is used, and for example, perfluoropolyether expressed by the following chemical formula (1) or a low polymer of trifluoride ethylene chloride expressed by the following chemical formula (2) is suitably used.

[Formula 1]

R(C₃F₆O)ₚ-(C₂F₄O)_{q}-(CF₂O)ᵣR' (1)

(where, R and R' are a perfluoroalkyl group or an oxyperfluoroalkyl group, p, q and r are positive integers, and two of them may be zero. And, p+q+r is determined to be in a liquid or grease form at normal temperature.)

[Formula 2]

(C₂CIF₃)ₙ

(where, n is determined to be in a liquid or grease form at normal temperature.)

As the silicone-based lubricant, there is a known silicone oil, and its examples include a dimethyl silicone oil, a methylphenyl silicone oil and a methylhydrogen silicone oil, or a denatured substance thereof (e.g., amino-modification and alkyl-modification).

In addition, as the olefinic lubricant, a known olefinic oil is used, and examples include polyethylene, polypropylene, an ethylene-propylene copolymer, an ethylene-butene copolymer, an ethylene-octene copolymer, a polypropylene-butene copolymer, polybutene, an ethylene-acrylic ester copolymer, an ethylene-methacrylic ester copolymer, an ethylene-acrylic acid copolymer, an ethylene-vinyl acetate copolymer, etc., or a denatured substance thereof in a liquid form or grease form at normal temperature.

The lubricant coating can be formed on the sliding contact surface by, for example, applying the above-described lubricant to the front surface or the inner surface of the front end edge portion of the socket 1s as the sliding contact surface or a desired portion of the outside surface of the nozzle In. The method of applying the lubricant is not particularly limited and it is possible to adopt any known method such as a dipping method, a brush coating method, a spray coating method or the like.

It is preferable that the coating amount of the lubricant is, for example, 0.001 mg/cm² or more and 0.100 mg/cm² or below. If the coating amount of the lubricant is less than 0.001 mg/cm², there is a possibility that sufficient lubricating properties cannot be assured. The lubricant tends to be consumed because of repeated sliding contact between the socket 1s and the nozzle 1n, possibly resulting in unsatisfactory durability. And, when the coating amount of the lubricant is about 0.100 mg/cm², durability can be secured, but if the coating amount exceeds it, the lubricant adheres to an unnecessary portion, and the injection of the liquid fuel from the nozzle In to the socket 1s might be hindered.

As the metal coating, one formed of particularly gold (Au) or its alloy is preferable because it is excellent in lubricating properties. The metal coating is not necessarily limited to a particular thickness but preferably 10 nm or more and 500 µm or below, and more preferably 50 nm or more and 100 µm or below. The metal coating on the sliding contact surface can be formed by, for example, a sputtering method, a vapor deposition method or an electrolytic or nonelectrolytic plating method on the sliding contact surface which is the front surface or the inner surface of the front end edge portion of the socket 1s or a desired portion of the outside surface of the nozzle 1n. As the coating mainly formed of carbon, it is preferably formed mainly of carbon such as diamond like carbon (DLC) and graphite.

In a case where the resin coating, the metal coating or the coating mainly formed of carbon is formed, it is preferable that a surface roughness Ra is 3.2 µm or below. If the surface roughness Ra exceeds 3.2 µm, the nozzle In cannot be slid properly with respect to the socket 1s when the socket 1s and the nozzle In are connected or separated, and an excessive bending load is applied to the nozzle 1n, resulting in a possibility of breaking it. The surface roughness Ra denotes an arithmetic mean roughness Ra, and the value of the arithmetic mean roughness Ra is expressed according to 3 "Definition and display of defined arithmetic mean roughness" in JIS B0601 (1994).

Assuming that the lubricity providing portion 30 is disposed, it is preferable that a polishing treatment is performed on the sliding contact surface where the lubricity providing portion 30 is disposed, namely the front surface or the inner surface of the front end edge portion of the socket 1s or the nozzle 1n. Generally, the surface of a member undergone the plastic working is rough, so that there is a possibility that satisfactory lubricating properties cannot be obtained by merely disposing the lubricity providing portion 30, and when the socket 1s and the nozzle 1n are connected or separated, the nozzle 1n cannot be caused to appropriately slide with respect to the socket 1s, and an excessive bending load is applied to the nozzle 1n, resulting in a possibility of breaking it. Therefore, the sliding contact surface is previously undergone the polishing treatment to reduce the surface roughness, and then the lubricity providing portion 30 is disposed, so that sufficient lubricating function can be exhibited, and the nozzle 1n tends to be suppressed from being broken.

This polishing treatment can be any polishing treatment, for example, a barrel polishing treatment, an electrolytic polishing treatment or a magnetic polishing treatment. The surface roughness Ra of the sliding contact surface undergone the polishing treatment is preferably 3.2 µm or below. If the surface roughness Ra exceeds 3.2 µm, the nozzle 1n cannot be caused to appropriately slide with respect to the socket 1s when the socket 1s and the nozzle 1n are connected or separated, and an excessive bending load is applied to the nozzle 1n, resulting in a possibility of breaking it.

In addition, when it is determined that the lubricity providing portion 30 is disposed and a member itself on which the lubricity providing portion 30 is disposed has lubricating properties, the lubricating function can be maintained even when the lubricity providing portion 30 has exhausted, and the nozzle 1n can be readily suppressed from being broken for a long period. Examples of such a member include the nozzle head 11, the key portion 13 and the key ring 20, which are component members configuring the inserting portion 22, on the side of the nozzle 1n, and the front outer cylinder portion 31a, the guide member 35 and the nozzle holding mechanism 36, which are component members configuring the nozzle insertion port 32, on the side of the socket 1s. And, examples configuring the above member include suitably at least one type of resin selected from a fluorine-based resin, a silicone-based resin, an olefin-based resin, an acetal resin and a urethane resin.

A method of connecting the coupler 1 is described below. When the shape of the key portion 13 formed on the inserting portion 22 of the nozzle 1n matches the shape of the key groove 44 formed in the socket 1s, they can be connected. And, when the shape of the key portion 13 matches the shape of the key groove 44, the inserting portion 22 of the nozzle 1n is inserted into the nozzle insertion port 32 of the socket 1s, the tip end of the rubber holder 37 is fitted into the recessed portion 11d formed in the inserting portion 22 to form a contact seal surface between them, and the periphery of the liquid fuel passage is sealed before the valves 14 and 40 are brought into an open state.

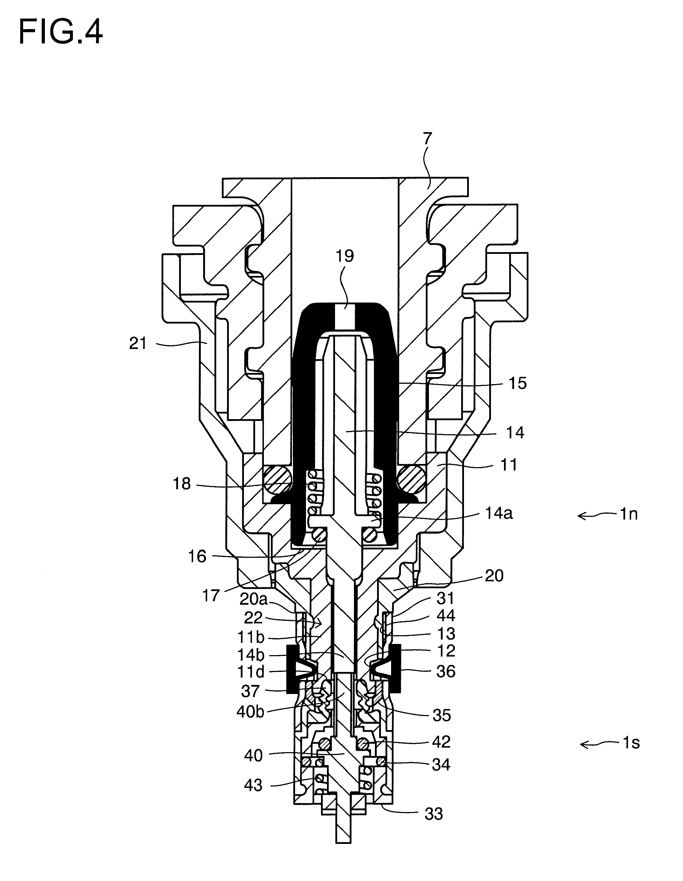

When the nozzle 1n is inserted into the socket 1s, the tip ends of the valve stem 14b of the nozzle In and the valve stem 40b of the socket 1s are mutually butted. When the nozzle 1n is further inserted into the socket 1s, the valve 40 of the socket 1s retracts to fully open the passage, the valve 14 of the nozzle In retracts to establish the liquid fuel passage, and the liquid fuel stored in the cartridge 3 is supplied (injected) into the fuel storing section 5 of the fuel cell 2. FIG 4 shows a state that the nozzle 1n is connected to the socket Is. The lubricity providing portion 30 is not shown in FIG 4. In the connected state, the nozzle holding mechanism 36 of the socket 1s is engaged with the peripheral groove 12 of the nozzle head 11 of the nozzle 1n, thereby holding the connected state of the nozzle 1n and the socket 1s.

When the supply of the liquid fuel from the cartridge 3 to the fuel cell 2 is completed and the nozzle
In is removed from the socket 1s, an operation opposite to the above connecting operation is performed. Specifically, when the nozzle 1n is pulled out of the socket 1s, first the nozzle holding mechanism 36 and the peripheral groove 12 of the nozzle head 11 are disengaged. And, when the nozzle 1n is pulled out, the valve 14 of the nozzle 1n is relatively moved to the front end side, and the liquid fuel passage in the nozzle 1n is closed. Besides, when the nozzle In is continuously pulled out, the valve 40 of the socket 1s is also moved toward the tip end, and the liquid fuel passage in the socket 1s is closed. Finally, the valve stem 14b of the nozzle 1n and the valve stem 40b of the socket 1s are separated from each other, the recessed portion 11d formed in the inserting portion 22 and the rubber holder 37 are also separated to release the seal and to have the unconnected state as shown in FIG 2.

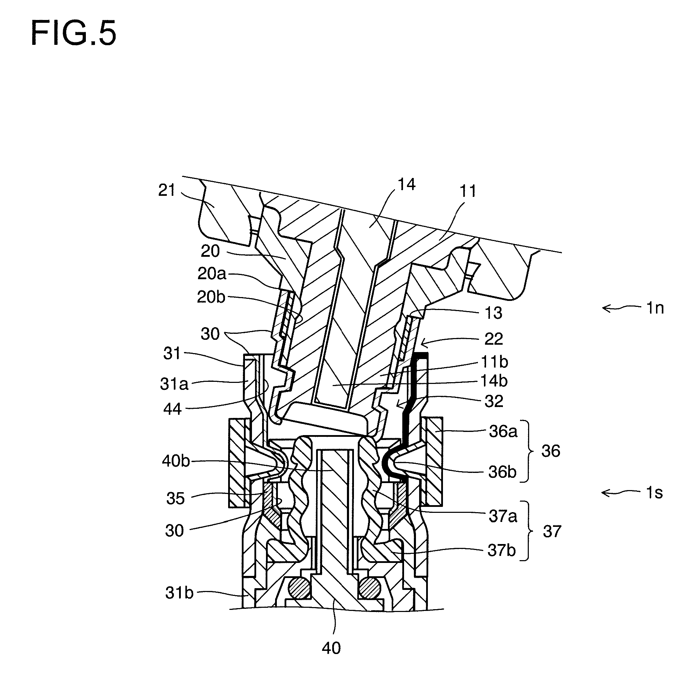

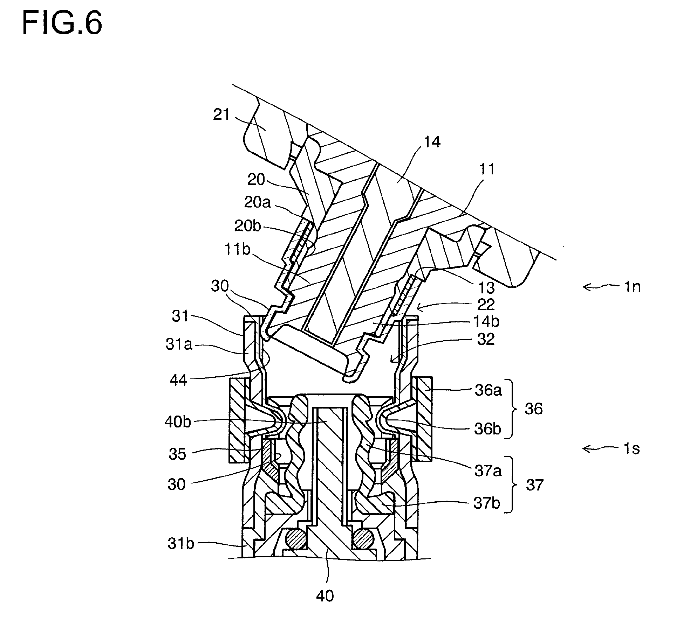

To connect or separate the socket 1s and the nozzle In, they are preferably connected or separated so as to align the shaft center of the socket 1s and the shaft center of the nozzle 1n, but for example, the shaft center of the nozzle 1n is occasionally connected or separated in an inclined form to or from the shaft center of the socket 1s as shown in FIGs. 5 and 6.

Thus, if their shaft centers are inclined, for example, when the side portion of the inserting portion 22 of the nozzle 1n is brought into contact with the front end edge portion of the front outer cylinder portion 31a of the socket 1s, the tip end of the inserting portion 22 is immediately contacted to the inner surface of the front outer cylinder portion 31a. Therefore, a bending load which has the front end edge portion of the front outer cylinder portion 31a of the socket 1s as a fulcrum tends to be applied to the nozzle 1n, and particularly to the inserting portion 22, resulting in breaking easily.

But, according to the present invention, since the lubricity providing portion 30 is provided on, for example, the sliding contact surface where the side portion of the inserting portion 22 and the front end edge portion of the front outer cylinder portion 31a make sliding contact with each other and the sliding contact surface where the tip end of the inserting portion 22 and the inner surface of the front outer cylinder portion 31a make sliding contact with each other, the inserting portion 22 and the front outer cylinder portion 31a make readily sliding contact with each other on the above sliding contact surfaces, the application of an excessive bending load to the inserting portion 22 is suppressed, and the inserting portion 22 is suppressed from being broken.

The fuel cell 2 of the invention is described below. The fuel cell 2 of the invention is provided in the above-described coupler 1 for a fuel cell with the socket 1s in which the lubricity providing portion 30 is disposed, the fuel storing section 5 for storing the liquid fuel supplied via the socket 1s, and the fuel battery cell 4 which is an electromotive portion to generate power by using the liquid fuel. The fuel battery cell 4 in the fuel cell 2 of the invention is not limited to a particular one, and for example, there is a passive or active type DMFC to which a satellite type cartridge 3 is connected if necessary.

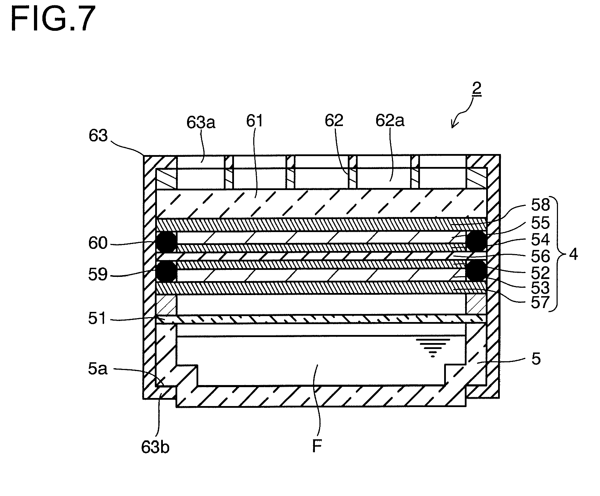

Application of the internal vaporization type DMFC to the fuel cell 2 of the invention is described below. FIG 7 is a sectional view showing an example of the fuel cell 2 of the invention. The fuel cell 2 is mainly comprised of the fuel battery cell 4 which configures an electromotive portion, the fuel storing section 5, and the fuel receiving portion 6 which has an unshown socket Is. For example, the fuel receiving portion 6 having the unshown socket 1s is provided on the under surface of the fuel storing section 5 as shown in FIG 1.

The fuel battery cell 4 has a membrane electrode assembly (MEA) which is composed of an anode (fuel electrode) comprising an anode catalyst layer 52 and an anode gas diffusion layer 53, a cathode (oxidant electrode/air electrode) comprising a cathode catalyst layer 54 and a cathode gas diffusion layer 55, and a proton (hydrogen ion) conductive electrolyte membrane 56 sandwiched between the anode catalyst layer 52 and the cathode catalyst layer 54. Examples of the catalyst contained in the anode catalyst layer 52 and the cathode catalyst layer 54 include a single element of platinum group elements such as Pt, Ru, Rh, Ir, Os, Pd, etc., an alloy containing a platinum group element, and the like.

Specifically, it is preferable to use Pt-Ru, Pt-Mo or the like which has high resistance to methanol and carbon monoxide for the anode catalyst layer 52, and it is preferable to use platinum, Pt-Ni or the like for the cathode catalyst layer 54. And, a supported catalyst using a conductive carrier such as carbon material or an unsupported catalyst may be used. Examples of the proton conductive material configuring the electrolyte membrane 56 include a fluorine-based resin (Nafion (trade name, a product of DuPont), Flemion (trade name, a product of Asahi Glass Co., Ltd.) and the like) such as a perfluorosulfonic acid polymer having a sulfonic group, a hydrocarbon-based resin having the sulfonic group, an inorganic substance such as tungstic acid or phosphotungstic acid, and the like. But, they are not used exclusively.

The anode gas diffusion layer 53 superposed on the anode catalyst layer 52 serves to uniformly supply the fuel to the anode catalyst layer 52 and also serves as a power collector of the anode catalyst layer 52. Meanwhile, the cathode gas diffusion layer 55 superposed on the cathode catalyst layer 54 serves to uniformly supply an oxidant to the cathode catalyst layer 54 and also serves as a power collector of the cathode catalyst layer 54. An anode conductive layer 57 is superposed on the anode gas diffusion layer 53, and a cathode conductive layer 58 is superposed on the cathode gas diffusion layer 55.

The anode conductive layer 57 and the cathode conductive layer 58 are configured of, for example, a mesh, a porous film, a thin film or the like which is formed of a conductive metal material such as gold. Rubber O-rings 59 and 60 are interposed between the electrolyte membrane 56 and the anode conductive layer 57 and between the electrolyte membrane 56 and the cathode conductive layer 58, respectively. They prevent the fuel and the oxidant from leaking from the fuel battery cell 4.

For example, a methanol fuel is charged as liquid fuel F in the fuel storing section 5. The fuel storing section 5 is open on the side of the fuel battery cell 4, and the gas selectively permeable membrane 51 is disposed between the opening portion of the fuel storing section 5 and the fuel battery cell 4. The gas selectively permeable membrane 51 is a vapor-liquid separating film which allows the passage of only the vaporization component of the liquid fuel F but does not allows the passage of the liquid component. The component materials of the gas selectively permeable membrane 51 include, for example, a fluorine resin such as polytetrafluoroethylene. The vaporization component of the liquid fuel F means a gas mixture which consists of a vaporization component of methanol and a vaporization component of water when the aqueous methanol solution is used as the liquid fuel F, and means a vaporized component of methanol when pure methanol is used.

A moisture retaining layer 61 is laminated on the cathode conductive layer 58, and a surface layer 62 is laminated on the moisture retaining layer 61. The surface layer 62 has a function to adjust an introduced volume of air which is an oxidant, and its adjustment is performed by changing the quantity, size and the like of air introduction ports 62a formed in the surface layer 62. The moisture retaining layer 61 plays a role of suppressing water evaporation by partial impregnation of water generated by the cathode catalyst layer 54, and also has a function to promote uniform diffusion of the oxidant to the cathode catalyst layer 54 by uniform introduction of the oxidant into the cathode gas diffusion layer 55. For example, the moisture retaining layer 61 is formed of a member having a porous structure, and its specific component materials include a porous body or the like of polyethylene or polypropylene.

The gas selectively permeable membrane 51, the fuel battery cell 4, the moisture retaining layer 61 and the surface layer 62 are sequentially stacked on the fuel storing section 5, and they are entirely covered with, for example, a stainless steel cover 63 to configure the fuel cell 2. The cover 63 is provided with openings 63a at portions corresponding to the air introduction ports 62a which are formed in the surface layer 62. The fuel storing section 5 is provided with a terrace 5a for receiving a fixture portion 63b of the cover 63, and the terrace 5a is caught by caulking the fixture portion 63b to entirely hold the fuel cell 2 by the cover 63.

According to the fuel cell 2 having the structure described above, the liquid fuel F (e.g., the aqueous methanol solution) in the fuel storing section 5 is vaporized, and the vaporized component is supplied to the fuel battery cell 4 through the gas selectively permeable membrane 51. In the fuel battery cell 4, the vaporized component of the liquid fuel F is diffused by the anode gas diffusion layer 53 and supplied to the anode catalyst layer 52. The vaporized component supplied to the anode catalyst layer 52 causes an internal reforming reaction of methanol expressed by the following formula (1).

CH₃OH + H₂O → CO₂ + 6H⁺ + 6e⁻ (1)

When pure methanol is used as the liquid fuel F, steam is not supplied from the fuel storing section 5, so that water produced by the cathode catalyst layer 54 and water in the electrolyte membrane 56 are reacted with methanol to cause the internal reforming reaction expressed by the formula (1), or an internal reforming reaction is caused by another reaction mechanism not requiring water without depending on the above-described internal reforming reaction of the formula (1).

Proton (H⁺) produced by the internal reforming reaction reaches the cathode catalyst layer 54 through the electrolyte membrane 56. Air (oxidant) introduced through the air introduction ports 62a of the surface layer 62 is diffused into the moisture retaining layer 61, the cathode conductive layer 58 and the cathode gas diffusion layer 55 and supplied to the cathode catalyst layer 54. The air supplied to the cathode catalyst layer 54 causes the reaction expressed by following formula (2). This reaction causes a power generation reaction involving the generation of water.

(3/2)O₂ + 6H⁺ + 6e⁻ → 3H₂O ····· (2)

With the progress of the power generation reaction based on the above-described reaction, the liquid fuel F (e.g., an aqueous methanol solution or pure methanol) in the fuel storing section 5 is consumed. Since the power generation reaction stops when the liquid fuel F in the fuel storing section 5 is exhausted, the liquid fuel is supplied from the cartridge 3 into the fuel storing section 5 at that time or before that. The supply of the liquid fuel from the cartridge 3 is performed with the nozzle 1n of the cartridge 3 connected to the unshown socket 1s of the fuel cell 2 by inserting into it as described above. Since the socket 1s is provided with the lubricity providing portion 30, the nozzle 1n, and particularly the inserting portion 22, is suppressed from being damaged, and the liquid fuel can be supplied safely.

The coupler for a fuel cell and the fuel cell of the invention were described above, but the coupler for a fuel cell and the fuel cell of the invention are not limited to the embodiments described above. It is to be understood that in a practical phase it can be materialized with the component elements modified within the scope of technical idea of the present invention. And, various inventions can be made by an appropriate combination of the plural component elements described in the above embodiments. For example, some component elements may be deleted from the whole component elements shown in the embodiments. For example, a passive type DMFC which is under downsizing is suitable as a fuel cell, but its method, mechanism or the like is not limited when it is provided with the socket having at least the lubricity providing portion of the coupler for a fuel cell of the invention and the liquid fuel is supplied via the socket.

### Industrial Applicability

The coupler for a fuel cell of the invention is provided with lubricity providing portion for applying lubricating properties to a sliding contact surface where the socket and the nozzle make sliding contact with each other when the socket and the nozzle are connected to each other or separated from each other. Thus, since the lubricity providing portion is provided, the nozzle can be easily slid along the socket when the socket and the nozzle are connected or separated, and application of an excessive bending load to the nozzle can be suppressed. As a result, the nozzle is suppressed from being broken, and reliability and safety can be made excellent. Therefore, the coupler for a fuel cell of the invention can be used suitably to supply the liquid fuel of the fuel cell.

And, the fuel cell of the invention is provided with the socket having the lubricity providing portion of the coupler for a fuel cell. The fuel cell provided with the socket becomes excellent in reliability and safety, and it can be used suitably as a power source for various types of devices and equipment.

## Claims

1. A coupler for a fuel cell, comprising a socket which is provided on the fuel cell and has a valve body and an urging component for urging the valve body in the direction of closing it and a nozzle which is provided on a fuel cartridge for storing a liquid fuel for the fuel cell and has a valve body and an urging component for urging the valve body in the direction of closing it to supply the liquid fuel in the fuel cartridge to the fuel cell by opening both the valve bodies when the nozzle is connected to the socket,
wherein a lubricity providing portion for applying lubricating properties is disposed on the sliding contact surfaces of the socket and the nozzle, which make sliding contact with each other when the socket and the nozzle are connected to each other or separated from each other.

2. The coupler for a fuel cell according to claim 1,
wherein the lubricity providing portion is disposed on at least one of a front surface and an inner surface of the front end edge portion of a nozzle insertion port having a substantially cylindrical shape of the socket in which the nozzle is inserted.

3. The coupler for a fuel cell according to claim 1,
wherein the lubricity providing portion is disposed on an outside surface of an inserting portion of the nozzle which is inserted into the socket.

4. The coupler for a fuel cell according to claim 1,
wherein the lubricity providing portion is a resin coating formed of at least one type of resin selected from a fluorine-based resin, a silicone-based resin, an olefin-based resin and a urethane-based resin.

5. The coupler for a fuel cell according to claim 4,
wherein the resin coating has a surface roughness Ra of 3.2 µm or below.

6. The coupler for a fuel cell according to claim 1,
wherein the lubricity providing portion is a metal coating formed of gold or a gold alloy.

7. The coupler for a fuel cell according to claim 6,
wherein the metal coating has a surface roughness Ra of 3.2 µm or below.

8. The coupler for a fuel cell according to claim 1,
wherein the lubricity providing portion is a coating mainly formed of carbon such as diamond like carbon (DLC) and graphite.

9. The coupler for a fuel cell according to claim 8,
wherein the coating mainly formed of the carbon has a surface roughness Ra of 3.2 µm or below.

10. The coupler for a fuel cell according to claim 1,
wherein the lubricity providing portion is a coating formed of at least one type of lubricant selected from a fluorine-based lubricant, a silicone-based lubricant and an olefin-based lubricant.

11. The coupler for a fuel cell according to claim 1,
wherein the sliding contact surfaces where the lubricity providing portion is disposed are previously undergone a polishing treatment.

12. The coupler for a fuel cell according to claim 11,
wherein the polishing treatment is at least one polishing treatment selected from a barrel polishing treatment, an electrolytic polishing treatment and a magnetic polishing treatment.

13. The coupler for a fuel cell according to claim 11,
wherein the sliding contact surfaces undergone the polishing treatment have a surface roughness Ra of 3.2 µm or below.

14. The coupler for a fuel cell according to claim 1,
wherein a member on which the lubricity providing portion is disposed is made of a material having lubricating properties.

15. A fuel cell, comprising:
a socket provided with the lubricity providing portion in the coupler for a fuel cell according to claim 1;
a fuel storing section for storing a liquid fuel to be supplied via the socket; and
an electromotive portion for generating power by using the liquid fuel.
